# EUROPEAN PATENT APPLICATION

(11) **EP 4 600 160 A1**
(43) Date of publication of application: **13.08.2025**
(21) Application number: 25157357.2
(22) Date of filing: 12.02.2025
(51) Int. Cl.: B64U 10/14, B64U 20/40, B64U 20/50, B64U 20/70, B64U 20/80, B64U 20/87, B64U 30/293, B64U 60/30, B64U 60/50, B64U 101/18, B64U 101/64

(54) **UNMANNED AIRCRAFT FOR TRANSPORTATION OF LOADS**

(30) Priority: 12.02.2024 UA 202400719
(71) Applicant: Astero Robotics OÜ, 10152 Tallinn (EE)
(72) Inventor:
(74) Representative: Koitel, Raivo

(57) **Abstract**

The invention relates to unmanned aerial vehicles (UAVs). Such devices are designed for delivering and dropping loads over certain distances. The operation of the UAV according to the invention makes it possible to provide a greater overall flight range and flight duration, as well as a greater weight and a larger number of types of payload that the UAV can deliver.

## Description

The present invention relates to unmanned aerial vehicles (UAVs). Such devices are designed for delivering and dropping loads over certain distances.

### PRIOR ART

Unmanned aerial vehicles (UAV) have gradually become a part of our everyday life - they deliver loads, conduct various surveys, analyse the surrounding space, monitor territories, control objects, take photos and videos, are used in rescue operations, warfare, and find many other applications.

From the Russian patent for utility model No. 221643, a small-sized unmanned aerial vehicle is known, comprising a body accommodating on its outer surface a support device for securing a thrower for appropriate portioned or artificial or one-time unloading of a payload during flight, as well as a pitch adjustment mechanism operating in accordance with the payload release algorithm, which is characterized in that said the above support device, which is intended for securing the payload thrower, comprises a bar secured along the longitudinal axis of the UAV, wherein the bar is equipped with a quick-release mechanism, which is intended for securing the payload thrower, while the thrower comprises a pipe with an actuating mechanism, which is intended for ejecting the payload, and the aerial vehicle is equipped with a guidance device for ejecting the payload, which is connected to the actuating mechanism intended for ejecting the payload from the pipe. According to this patent, the aerial vehicle can be either an airplane-type or a quadcopter-type UAV. Its disadvantages are the relative complexity of the design and the small weight payload that the UAV is capable of delivering. Moreover, the UAV is equipped with a Picatinny rail and a payload thrower. This further complicates the design and reduces the accuracy of the load release.

From the Ukrainian patent for utility model No. 103209, an unmanned multi-engine helicopter is known, comprising six electric motors with propellers, each of which is separately mounted on the ends of the supporting beams, which are rigidly attached to the central body, and landing gear rigidly attached to the supporting beams, characterized in that the supporting beams are hingedly attached to the central body and for transportation rotate together with the motors downwards close to the vertical plane, and the landing gear enables discrete height adjustment. This technical solution is based on the task of reducing the overall dimensions of unmanned multi-engine helicopters for their transportation and changing the height of the landing gear when using loads of different heights in order to reduce aerodynamic drag in cruising flight mode. However, the number of types of loads that the UAV can deliver is quite limited both in terms of type and weight; and their delivery range remains small. Additionally, in this UAV the beams are not compound.

A multi-rotor type R-18 UAV is known (https://ru.wikipedia.org/wiki/R18# or https://youtu.be/a2yr235Fcmo?si=0MSQEGCOqcOhh7RI), which is a multi-rotor type, capable of delivering loads over medium distances and which can be used for both military and civilian purposes. It consists of a frame; eight beams on which motors with propellers are mounted; a payload module with a three-section payload attachment system; two batteries mounted on the frame; a navigation antenna with a compass, and a camera module. Its total flight range is 20 km and its total flight duration is 45 min. The weight of fully equipped UAV is 17 kg, while the payload it can carry is only 5 kg. This design was chosen as the closest analogue. This UAV design has significant disadvantages. In particular, it belongs to octocopters, that is, it comprises eight motors with propellers. In order to provide a greater overall range and flight duration, as well as a greater payload weight that the UAV can deliver, it requires very powerful battery packs. The above characteristics significantly limit the range of military and civilian tasks that the UAV can perform, that is, the capacity of its batteries does not meet today's requirements for the delivery of loads in terms of their weight, shape, size, and delivery distance. This UAV is also quite large, and the features of its individual parts and components exclude the possibility of its compact (portable) assembly, and accordingly, increase the time of its assembly and deployment before immediate operation. In addition, this drone offers limited capability of handling loads of different sizes and shapes due to the limited availability of equipment intended for securing different types of loads.

Therefore, there is a technical challenge of developing such an UAV design, which would ensure a large overall flight range and flight duration, would have a sufficiently simple design that would allow it to be quickly folded and deployed before use and would ensure its relatively small overall dimensions, and would also ensure a large weight and number of types of payload that the UAV is capable of delivering.

### SUMMARY OF THE INVENTION

The above technical challenge can be solved with the help of an unmanned aerial vehicle intended for transportation of loads, consisting of:
- a rectangular frame 1, which consists of a lower and upper part connected perpendicular to each other;
- two batteries 7 attached to the top of the lower part of the said rectangular frame 1;
- four beams 2 attached to the corners of the said rectangular frame 1;
- four motors 5 with propellers 6, which is attached to the free ends of the said beams 2 and connected to the said two batteries 7 by flexible conductors;
- a payload module 3 with a three-section payload attachment system 3a attached under the lower part of the rectangular frame 1;
- a GNSS signal receivers with navigation antennas and a compass 8 attached to the upper part of the said rectangular frame 1;
- camera module 9 attached to the upper part of the said rectangular frame 1;
which is characterized in that it comprises four posts 4 of rectangular cross-section attached at the corners of said load module 3, wherein said four beams 2 are attached at the corners of said rectangular frame 1 with the possibility of their assembly along each other, given that each of said batteries 7 has a capacity of 6,200 to 65,000 mAh, and said three-section load attachment system 3a enables the installation of replaceable modules in accordance with the load type.

The technical result of the UAV for transporting loads according to the invention is a UAV that has an increased overall flight range and flight duration, has a simple design, which allows it to be quickly folded and deployed before use, and also ensures a large weight and number of types of payload that the UAV is capable of delivering.

### DETAILED DESCRIPTION OF THE INVENTION

### Brief list of figures

The following figures disclose in more detail the design of the unmanned aerial vehicle for transporting payloads according to the invention.
Figure 1 shows a general view of the unmanned aerial vehicle according to the invention, where:
   1 - rectangular frame;
   2 - beam;
   4 - post;
   5 - motor;
   6 - propeller;
   7 - battery;
   8 - GNSS signal receivers with navigation antennas and a compass.
Figure 2 shows a left view of the unmanned aerial vehicle according to the invention, where:
   2 - beam;
   3 - load module;
   4 - post;
   5 - motor;
   6 - propeller;
   7 - battery;
   8 - GNSS signal receivers with navigation antennas and a compass;
   9 - camera module.
Figure 3 shows a top view of the unmanned aerial vehicle according to the invention, where:
   2 - beam;
   5 - motor;
   6 - propeller;
   8 - GNSS signal receivers with navigation antennas and a compass.
Figure 4a shows a general view of the payload module with a three-section load attachment system.
Figure 4b shows a bottom view of the payload module with a three-section load attachment system.
Figure 4c shows a front view of the three-section load attachment system 3a.
Figure 4d shows a left view of the three-section load attachment system 3a.
Figure 5a shows a top view of a folded UAV according to the invention, where:
   1 - frame;
   2 - beam;
   8 - GNSS signal receivers with navigation antennas and a compass.
Figure 5b shows a front view of a folded UAV according to the invention, where:
   1 - frame;
   2 - beam;
   5 - motor;
   6 - propeller;
   8 - GNSS signal receivers with navigation antennas and a compass.
Figure 5c shows a left view of a folded UAV according to the invention, where:
   1 - frame;
   2 - beam;
   5 - motor;
   6 - propeller;
   8 - GNSS signal receivers with navigation antennas and a compass.

The claimed UAV is part of a complex comprising also a set of ground equipment sufficient for its operation (means for planning and programming flight tasks, controlling and configuring the UAV, ensuring communication with the UAV using secure communication channels, receiving, recording and reproducing visual information obtained during flights).

General features of the claimed UAV:
- high load capacity with small dimensions;
- high speed and manoeuvrability;
- ability to operate in difficult meteorological conditions;
- relatively short complex deployment time;
- the complex allows to perform reconnaissance in manual control mode in a given area.

The UAV can operate in both manual and automatic modes: flying along a given route, releasing the payload at a given point and returning to the specified landing point. The UAV also has a return function using GPS coordinates. The UAV is capable of performing a vertical landing on a suitable site in automatic mode without the use of additional systems.

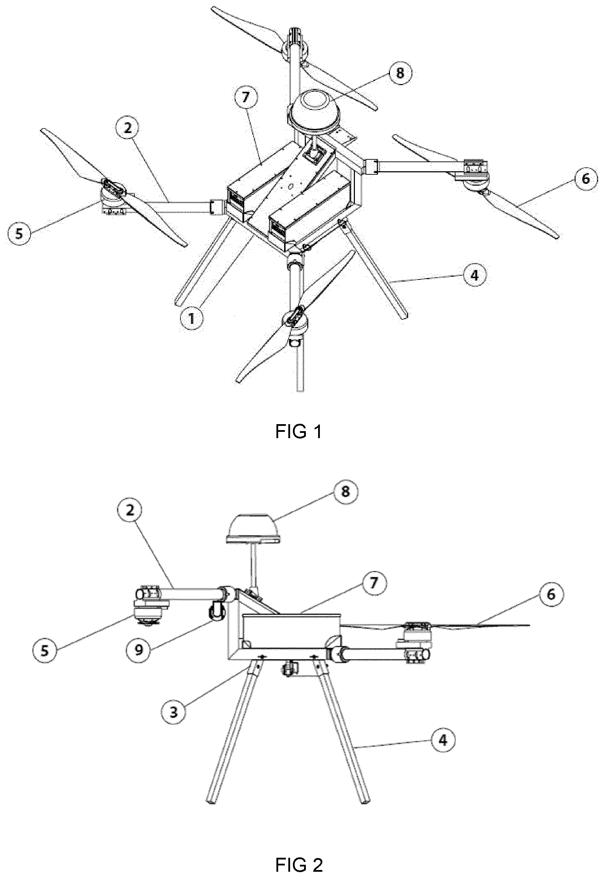

The frame 1 is the main claimed structural element of the UAV, which provides all of its aerodynamic characteristics and strength characteristics. Frame 1 is used to mount all UAV equipment, it accommodates on-board equipment and all types of target equipment and connecting cables; it provides access to on-board equipment for inspection, diagnostics and repair (see Figure 1).

The aerodynamic configuration of the UAV according to the invention is a quadcopter, that is, it comprises four beams 2 with motors 5 and propellers 6 attached to them (see Figures 1, 2, and 3).

The UAV power plant consists of an electric motor group and provides thrust and orientation of the UAV in the air. The power plant does not perform any other functions. It includes two type Li-NMC 62,000 mAh batteries 7, which allows the UAV to remain in flight for the required period of time with the maximum permissible payload weight. After five full charge-discharge cycles, the capacity of each battery reaches 65,000 mAh. The said batteries 7 are located on the sides of the frame 1 with the distribution of the centre of weight, which ensure additional stability of the UAV in the horizontal plane during flight, preventing it from swinging and losing its balance (see Figures 1-3).

The navigation equipment of the UAV according to the invention provides a sufficient amount of information for UAV piloting in automatic and manual modes, determining the position and air parameters of the UAV and indicating them to the external operator. It includes receivers of signals from satellite navigation systems (GNSS) with antennas and a compass 8 (combining with an electronic magnetometer is also permitted), and an analogue type camera module 9. The GNSS receiver receives and processes signals from satellite navigation systems. Installation of GNSS modules of the D series - Drotek (GPS, GLONASS, Galileo, BeiDuo) with directional angular antennas; and the U series - UNO (GPS, GLONASS, Galileo, BeiDuo) with directional angular antennas on UAVs is possible. Camera module 9 is designed to display the situational environment in real time and to be used to control the UAV. It consists of a set of mounts and the camera itself. The camera enables UAV control, target seeking and surveillance tasks at any time of the day in good and moderate weather conditions.

The UAV according to the invention also includes an automatic flight control system. It is divided into the function of flying according to the mission when there is sufficient data from GNSS systems; the function of returning the UAV to the take-off point when there is sufficient data from GNSS systems; and the function of returning by azimuth in the direction of the last home point before the data from GNSS systems becomes unavailable. This feature will work as long as there are clear satellite navigation signals.

The UAV according to the invention shall be equipped with four brushless motors 5. The communication equipment installed on the UAV according to the invention (GNSS signal receivers with navigation antennas and a compass 8, see Figures 1-3) ensures the transmission of control signals, data and commands between the on-board systems of the UAV and the ground control station.

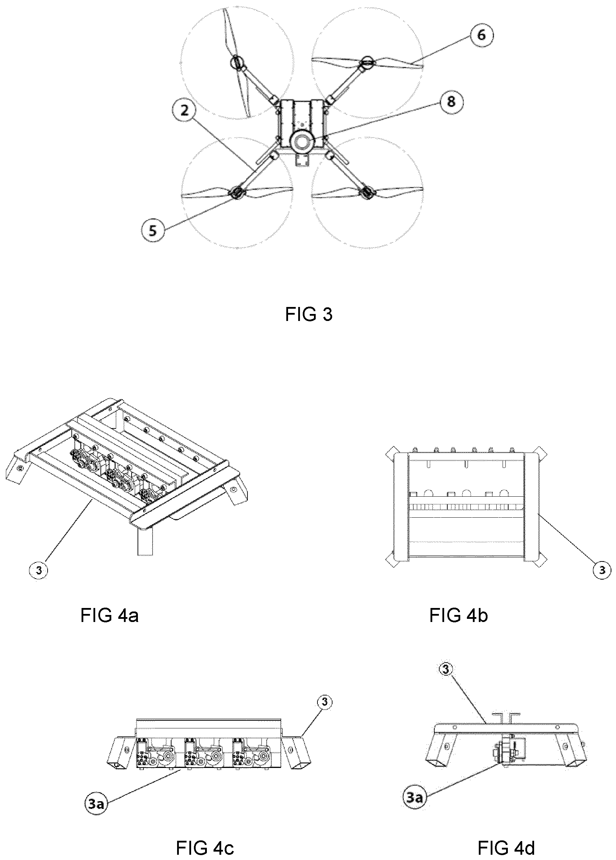

The load module 3 has a rectangular shape and includes a three-section load attachment system 3a (see Figure 2 and 4a-4b). This system has a modular structure, which allows changing the load attachment and release modules depending on the type and weight of payload that must be carried using the UAV according to the invention. If a long-term delivery of various objects over a certain distance is required, then the UAV of the invention can be equipped with various load attachment and release modules depending on the type of load, and also the batteries 7 can be changed after a certain period of continuous operation.

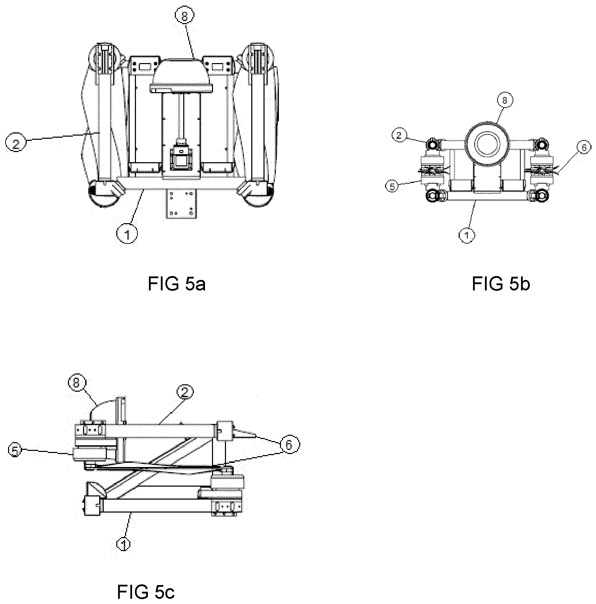

The design of the UAV and other components of the complex ensures safe and reliable operation of the complex. For safe operation, the design of the UAV and remote control station equipment is easy to disassemble and has reliable assembly units. Said ease of disassembly is ensured by hinged fastening systems, with the help of which the beams 2 are connected to the frame 1 (see Figures 5a-5c). High dimensional compactness of the UAV according to the invention is ensured due to the fact that the beams 2 are folded along the frame 1. When the UAV is deployed, the operator unfolds the beams 2 relative to the frame 1, installs two batteries 7 on it and connects them to the motors 5 with propellers 6, unfolds the navigation antennas and the compass of the GNSS signal receivers 8, and installs the camera module 9. The deployment and dismantling of the complex is performed without the use of specialized tools, does not require special skills from the operator and takes an average of 5-10 minutes. The design of the complex ensures the interchangeability of its components, their maintainability, as well as the possibility of improving and enhancing its technical and operational characteristics.

The using and operating conditions of the UAV according to the invention are given in Table 1.

**Table 1**

| **Feature** | **Value, units of measure** |
|---|---|
| Operating temperature range | -15 °C to +40 °C |
| Wind velocity | no more than 10 m/s |
| Air humidity | no more than 90% |

Comparative characteristics of unmanned aerial vehicles according to the prototype and the invention are provided in Table 2.

**Table 2**

| **Feature** | **Value, units of measure** | |
|---|---|---|
| | **R-18 Unmanned Aerial Vehicle** | **Unmanned aerial vehicle according to the invention** |
| Cruising speed | 43.2 km/h | 43 km/h |
| Complex deployment time | Up to 15 min | 5-10 min |
| Tactical radius | 5 km | 10 km |
| Maximum flight range | 20 km | 25 km |
| Flight duration | Up to 45 min | 50 min |
| Practical ceiling | 300 m | No less than 600 m |
| Unladen weight | 17 kg | 22 kg |
| Payload | 5 kg | 10 kg |
| Payload/unladen weight ratio | 0.29 | 0.45 |
| Battery type | Li-lon 6s 24v 32,500 mAh x 2 | Li-NMC 62,000 mAh x 2 (after five full charge-discharge cycles, the capacity reaches 65,000 mAh) |

Therefore, the use of the UAV according to the invention allows to achieve the desired technical result, namely: the UAV has an increased overall flight range and flight duration, as well as double the weight of the payload that the UAV can deliver compared to the closest analogue, and a 1.5 times better payload/unladen weight ratio, including due to the increased capacity of the batteries. The deployment time of the UAV before its operation has also been significantly reduced and the number of types of payload has been significantly expanded - thanks to the modular structure of the payload attachment system 3a, these can be a variety of objects for both military and civilian purposes. The UAV also has a simple design compared to its analogues.

## Claims

1. Unmanned aerial vehicle for transportation of loads, consisting of:
- a rectangular frame, which consists of a lower and upper part connected perpendicular to each other;
- two batteries attached to the top of the lower part of the said rectangular frame;
- four beams attached to the corners of the said rectangular frame;
- four motors with propellers attached to the free ends of the said beams and connected to the said two batteries by flexible conductors;
- a load module with a three-section load attachment system attached under the lower part of the rectangular frame;
- a GNSS signal receivers with navigation antennas and a compass attached to the upper part of the said rectangular frame;
- a camera module attached to the upper part of the said rectangular frame;
**characterized in that** it comprises four posts of rectangular cross-section attached at the corners of said load module, wherein said four beams are attached at the corners of said rectangular frame with the possibility of their assembly along each other, given that each of said batteries has a capacity of 6,200 to 65,000 mAh, and said three-section load attachment system enables the installation of replaceable modules in accordance with the load type.
